# EUROPEAN PATENT SPECIFICATION

(11) **EP 3 393 994 B1**
(45) Date of publication and mention of the grant of the patent: **07.10.2020**
(21) Application number: 16740961.4
(22) Date of filing: 23.06.2016
(51) Int. Cl.: C04B 26/06, C04B 20/10

(54) **COMPOSITION FOR A PASTY FILLER MATERIAL, PASTY FILLER, AND METHOD FOR PRODUCING A PASTY FILLER MATERIAL**
ZUSAMMENSETZUNG FÜR EIN PASTÖSES FÜLLMATERIAL, PASTÖSER FÜLLSTOFF UND VERFAHREN ZUR HERSTELLUNG EINES PASTÖSEN FÜLLMATERIALS
COMPOSITION POUR UN MATÉRIAU DE CHARGE PÂTEUX, CHARGE PÂTEUSE ET PROCÉDÉ DE PRODUCTION DE MATÉRIAU DE CHARGE PÂTEUX

(30) Priority: 21.12.2015 EP 15003627
(43) Date of publication of application: 31.10.2018
(73) Proprietor: Knauf Gips KG, 97346 Iphofen (DE)
(72) Inventor: WINGS, Norbert, 55234 Wendelsheim (DE)
(74) Representative: dompatent von Kreisler Selting Werner - Partnerschaft von Patent- und Rechtsanwälten mbB
(86) International application number: PCT/EP2016/001067
(87) International publication number: WO 2017/108145

(56) References cited:
- US-A- 4 686 253
- US-B1- 6 649 721

## Description

The invention relates to a composition for a pasty filler material, pasty filler, and a method for producing a pasty filler material according to the respective independent claims.

In prior art, basically two types of fillers are known for filling joints or for being applied to surfaces, such as walls, in order to smooth out unevenness and to additionally function as primer layer for another layer to be applied thereon.

Namely, on one hand, there are powder fillers, and on the other hand, there are pasty fillers. Pasty fillers have the advantage that they are ready to use, whereas powder fillers have to be mixed with water before use. Pasty fillers have to be storable over months without their processing characteristics being modified or deteriorated.

A polymer binder, for example, polyvinyl acetate, polyethylene vinyl acetate, polyacrylate, and/or polyvinyl alcohol is employed, either as aqueous dispersion or as re-dispersible powder. The binders have the function to bind the components of the filler material and to adhesively bond the filler to the substrate, like a wall or similar.

Filler particles, nodular and lamellar materials which are usually of mineral origin are used. The filler particles form the framework or skeleton of the coating and, thus, contribute to the layer thickness and sink characteristics depending on the amount of filler material added. A main mineral filler material is natural calcium carbonate or calcium magnesium carbonate (dolomite).

As additives thickening agents and biocides are usually used. Thickening agents may be cellulose based additives, such as hydroxypropyl methylcelluloses and hydroxyethyl celluloses which have the effect that the viscosity of the pasty filler is maintained constant, and which ensure a constant processability when stored over a time period of up to one year.

Biocides are added in order to prevent bacterial contamination, and finally, fungicides are added for preventing fungal infestation.

The majority of pasty filler materials are applied manually, for example, by means of a trowel. If needed, the person using the filler material adds water for facilitating and improving the processability.

With increasing mechanization with respect to processing of chemical building products, pasty filler materials which can be used in processing machines have been developed. Specifically, spray filler materials have been developed which can be applied to a surface with a layer thickness of up to 3 mm and which act as a substrate for further, subsequently applied layers as for example wall paint or wall papers.

However, spray fillers on a mineral basis known from prior art have the following shortcomings: When applying the pasty material by spraying, usually the method of hydraulic atomization known as "airless application method" is used. A key requirement for the airless application is that the homogeneous pasty material requires a reduced shear stress once it's being moved through the spraying equipment and spray nozzle during spraying. Therefore pasty spray fillers have to be accordingly prepared prior to being applied to a surface or joint by mechanical homogenization which effects a shear thinning. This additional procedure leads to a substantial increase of the total processing time.

Furthermore in pasty spray fillers known from prior art as well as in plaster materials usually organic components are implemented in order to ensure their mechanical workability. The use of organic components, however, usually involves emissions and odor nuisance which restricts the use of such products for indoor application. Moreover, organic components are critical with respect to fire behavior.

Pasty spray fillers are used to level unevenness of a surface so as to provide a homogeneous surface for further coatings, for example, decorative coatings. Many pasty fillers which are extremely well suited for being used in mechanical spraying devices, are either not able to provide this compensating function such that additional processing steps are necessary, or entail the above mentioned disadvantages with respect to odor and emissions, or poor fire behavior.

As described in US 6,545,066 in particular lightweight pasty fillers contain spherical silicate products, like micro perlite, for reducing the specific weight of the final product and provide an increased surface area yield of the product. Lightweight pasty fillers tend to (post-) thicken for several days to weeks after production and to the generation of air bubbles during storage. The generation of air bubbles and the thickening causes problems during the machine application, in particular with the "airless application method".

US 4,686,253 discloses expanded perlite coated with a composition to render the perlite impervious to water, and a joint compound incorporating the perlite.

Finally, in cases where lightweight pasty filler materials are used as substrate layers for subsequent decorative coatings, products having a very high brightness and a high drying capacity have to be employed.

Therefore, it is an objective of the present invention, to provide a composition for a lightweight pasty filler material which can be easily machine-processed, provides good crack and shrinkage resistance, and shows only a low tendency of thickening during material storage. It is also an objective of the present invention to provide a corresponding lightweight pasty filler material, and a method for producing such a lightweight pasty filler material.

This objective is solved by the composition of claim 1. Preferred embodiments of the invention are defined in the respective dependent claims.

The inventive composition provides lightweight pasty fillers which can be used without any additional processing or preceding preparation steps, in particular in airless spraying applications. Such a pasty filler can be easy manually processed and provides good crack and shrinkage resistance. Additionally, if it uses an additive consisting of a blend of liquid hydrocarbons, modified fatty acid derivatives, nonionic emulsifiers, and silicone oil an excellent workability of the filler over a long time period is ensured. The aliphatic hydrocarbon components of this additive have an anti-foaming/venting effect. Thereby, air bubbles generated during storage of the filler material are removed.

The amphiphilic coating of the perlites reduces the water demand of the highly porous perlites and thus, minimizes post-thickening while keeping the rheological properties of the pasty filler material constant. The hydrophobic part of the coating interacts with the aliphatic constituents of the pasty filler and reduces the water demand of the porous perlites and therefore the post-thickening. The hydrophilic part of the coating interacts with the polar constituents of the filler and promotes homogeneity of the material; i.e. prevents separation of the individual constituents during storage.

A preferred composition further comprises 0.1 to 0.5 % by weight of an additive consisting of a blend of liquid hydrocarbons, modified fatty components, especially modified fatty acid derivatives, nonionic emulsifiers, and silicone oil. All amounts given in this document refer to the pasty consistence of the filler material, i.e. including the amount of water, except indicated otherwise.

The aliphatic hydrocarbons improve the flow characteristics of the sprayable filler material. This allows a reduced shear stress for implementing a continuous material transport, for example, an airless method without a mechanical homogenizing of the material before the application. Once the material is on the surface the shear stress increased again, which allows to achieve a comparably high application thickness.

According to a preferred embodiment of the invention the liquid hydrocarbons are selected from the group consisting of saturated hydrocarbons with the general formula CₙH₂ₙ₊₂, where n= 5 to 15 and cycloalkanes, composed of 5 and/or 6 member rings with the general formula CₙH₂ₙ (n being 5 or 6), and mixtures thereof. The saturated hydrocarbons comprise straight or branched carbon chains or both.

Preferably, the modified fatty acid compounds are selected from the group consisting of fatty acid ester, fatty alcohols, alkoxylates, polyglycol-ethers, fatty acids, and mixtures thereof.

As the nonionic emulsifier compounds selected from the group consisting of fatty alcohols, cetyl alcohol, stearyl alcohol, cetostearyl alcohol, oleyl alcohol, and mixtures thereof can advantageously be used.

The silicone oil is preferably selected from the group consisting of liquid polymerized siloxanes with alternating silicone-oxygen atoms and organic side chains. The side chains are attached to the tetravalent silicone centers, preferably comprising alkyl and phenyl groups and mixtures thereof.

According to the present invention, in a composition for a physically drying pasty filler material, the organic binders are polymer binders which can be selected from the group consisting of polyethylene vinyl acetate, polyacrylate, and polyvinyl alcohol, and any combination thereof.

The polymer binders can be added to the composition as aqueous dispersion or as re-dispersible powder. Preferably, they are contained in amounts from 0.5 to 6 % by weight.

According to a preferred embodiment of the invention, the fillers are selected from the group consisting of calcium carbonates, calcium magnesium carbonates, calcium sulfates, and lamellar siliceous materials, and any combination thereof.

Preferably, the composition comprises 10 to 70 % by weight of the fillers. Especially preferred is an amount of 40 to 70 % by weight.

It is also advantageous, if the lamellar siliceous materials comprise kaolin of the illite group. Specifically preferred, kaolin and spherical calcium aluminum silicate are comprised in the composition in a ratio of 1 : 2. The lamellar siliceous materials preferably depict a platelet shape.

In another preferred embodiment of the present invention, the composition comprises 0.2 to 10 % by weight of palygorskite. Palygorskite has a particularly even and homogeneous surface structure. Further or additionally the composition can comprise mica, especially muscovite in the same amount range as the palygorskite.

The composition comprises perlites to reduce the weight for providing the lightweight pasty filler material.

According to a preferred embodiment of the invention the perlites are micronized and expanded perlites having a particle size D98 of lower than 200 µm, preferably lower than 100 µm. The mean particle size is determined by averaging linear intercepts of the grain boundaries. Especially, the mean particle size D50 is between 20 to 80 µm, preferably between 40 to 50 µm.

The composition can comprise 2 to 40 % by weight of perlites. Preferably, the composition comprises 2 to 10 % by weight of micronized and expanded perlites, especially coated with an amphiphilic coating. Especially preferred the composition comprises 3 to 8 % by weight of the micronized and expanded perlites.

The amphiphilic coating of the perlites of the invention comprises alkoxy-modified alkylsilicone resins, namely aminoalkyl-substituted polydimethylsiloxanes of the formula (C₂H₆OSi)ₙ, wherein n is from 30 to 300.

According to yet a further preferred embodiment of the invention, the composition further comprises modified celluloses and biocides as additives.

The modified celluloses may be selected from the group consisting of hydroxypropyl methyl-celluloses and hydroxyethyl celluloses. Moreover, it is preferred, if the composition comprises 0.1 to 0.9 % by weight of the hydroxypropyl-methyl celluloses and/or hydroxyethyl celluloses.

The biocides added to the composition are on a basis of 2-methyl-2H-isothiazoline-3-on (MIT) and 1,2-benzisothiazol-3(2H)-one (BIT).The composition preferably comprises 0.1 to 2 % by weight of biocides.

The composition further may comprise a starch as an additive. Modified starches are preferred, especially starch ether modified with alkylene oxides with the general formula CₙH₂ₙ + 1 O, where n = 2 to 5. The starches are in amounts of 0 to 0.4 % by weight contained in the composition.

Further, the composition may comprise polyethylene glycol which is effective in reducing dust which is produced for example by sanding the dried product. This compound can be contained in a range from 0 to 1.5 % by weight of the pasty composition.
The pasty filler preferably comprises water in amounts from 20 to 60 % by weight.

According to the present invention, also a pasty filler, in particular physically drying spray filler, which is made from the above specified composition is provided. The inventive filler provides the advantages already described above in connection with its composition.

Preferably, the specific weight of the pasty filler is below 1.2 kg/I. In particular preferred it is below 1 kg/I. This pasty filler is considered as lightweight pasty filler.

According to a further preferred embodiment of the present invention, a layer thickness of 1 to 3 mm immediately after application will shrink to layer thicknesses of 65 % up to 80 % after drying.

The present invention also provides a method for producing pasty filler, in particular also lightweight pasty filler as specified above. The method is based on a two-stage process, according to which in a first step, dry components are homogenized, and in a second step, the homogenized dry components are added to aqueous or water-dilutable components. The dry components comprise fillers, perlites, and optionally other dry additives and/or dry binding agents. The perlites have an amphiphilic coating comprising alkoxy-modified alkylsilicone resins, namely aminoalkyl-substituted polydimethylsiloxanes of the formula (C₂H₆OSi)ₙ, wherein n is from 30 to 300.

The aqueous or water-dilutable components can comprise an additive consisting of a blend of liquid hydrocarbons, modified fatty acid derivatives, nonionic emulsifiers, and silicone oil, and optionally other liquid additives and/or liquid binding agents. By the inventive method, pasty filler having the above described advantages can be provided.

Preferably, the first and second steps of the two-stage process may be carried out in parallel for more than 80% of the processing time. Thus, the parallel processing saves processing time, and thus renders the method more economical.

The resulting pasty filler generally can be applied by all methods known from the state of the art, e.g. by aid of mechanic tools or by machine processing. The machine processing is preferred.

Further details and features of the invention will become clear from the following description in connection with the drawings in which
Fig. 1 shows an illustration of a card house structure of lamellar filler particles in an inventive embodiment of a pasty filler material; and
Fig. 2 shows a comparison of the viscosity increase 24 h after production of an example of the inventive and state of the art pasty filler.

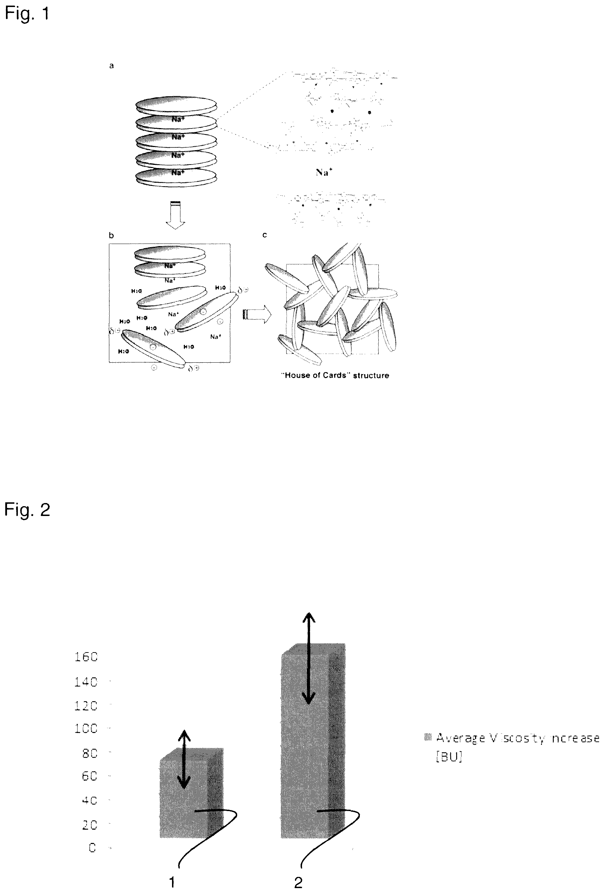

**Figure 1** shows an illustration of a card house structure. Since kaolin has a plate-shaped morphology, due to the charge distribution, a card house structure can be formed by the platelets to level out defect sites in the surface to be coated and to reach a high application layer thickness without the filler material slipping off the substrate.

**Table 1** shows a comparison of a state of the art sample 2 comprising micronized expanded perlites, however, the perlites being used without amphiphilic coating. Sample 1 is an embodiment of the invention and comprises micronized expanded perlites with an amphiphilic coating.

A lightweight pasty sprayable filler material having a composition according to the present invention provides for a homogeneous substance which still has comparably low shear stress at high shear rates.

**Tab. 1**

| **Raw Material** | **Raw Material Chemical Description** | **sample 1** | | **State of the Art sample 2** |
|---|---|---|---|---|
| | | 9 | % | % |
| dolomite powder 90 µm/ Microdol A 520 | carbonate | 840 | 48 | 49-50% |
| Minugel FG | palygorskite | 46 | 3 | 1,5-3,5% |
| Mica-Celia 125 | muskovite Mica | | | |
| Sil-Cell 35.34 | micronised expanded Perlite | | | 5-8% |
| Volite 200 H | micronised expanded perlites; surface Treatment (0,5%): silicone micro-emulsion (amino-alkyl-functional polydimethylsiloxane) | 90 | 5 | |
| Cellosize QP 52000 | hydroxyethyl cellulose (HEC) | | | 0,4-0,6% |
| Walocel MK 25000 PFV | hydroxypropyl methylcellulose (HPMC) | 7 | | |
| Agitan 218 | blend of liquid hydrocarbons, modified fatty acid components, nonionic emulsifiers, small amounts of silicone | | | 2-2,5% |
| Vinamul 3171 | ethylene-vinyl acetate copolymere (EVA) | 80 | 5 | 0,1-0,4% |
| Biocide div. | 2-methyl-2-H-isothiazolin-3-on (MIT) and 1,2-benzisothiazol-3(2H)-one (BIT) | 4 | 0 | |
| water | water | 670 | 39 | 30-32% |
| total kg batch | | 1736 | 100 | |

**Figure 2** shows the viscosity increase (difference of viscosity 24 h after production and directly after production) of the state of the art pasty filler according to sample 2 in Tab. 1 and the inventive pasty filler, composition as sample 1 according to Tab. 1. Post-thickening, as indicated by the difference in viscosity, is reduced to about 1/3 for the pasty filler according to the invention compared to the pasty filler according to the state of the art. Both, the pasty filler according to the invention and the pasty filler according to the state of the art, comprise micronized and expanded perlites. The perlites used in the inventive filler are treated with an amphiphilic coating, whereas the perlites used in the state of the art filler an amphiphilic coating is not apparent.

The amphiphilic coating was achieved with a silicone micro-emulsion comprising amino-alkyl functional polydimethylsiloxane.

A respective lightweight pasty spray filler material according to the present invention still has comparatively low shear stress at high shear rates. This enables a continuous material flow for an efficient spray application performance.

## Claims

1. Composition for a pasty filler material (1), comprising an organic binding agent, fillers, perlites, and additives, wherein the perlites have an amphiphilic coating, wherein the amphiphilic coating comprises alkoxy-modified alkylsilicone resins, namely aminoalkyl-substituted polydimethylsiloxanes of the formula (C₂H₆OSi)ₙ, wherein n is from 30 to 300, wherein the organic binding agent is a polymer binder.

2. Composition according to claim 1, wherein the fillers are selected from the group consisting of calcium carbonates, calcium magnesium carbonates, calcium sulfates, and lamellar siliceous materials, or any combination thereof.

3. Composition according to claim 2, wherein the lamellar siliceous materials comprise kaolin of the illite group.

4. Composition according to any one of claims 1 to 3, wherein the composition comprises 0.2 to 10 % by weight of palygorskite, preferably 1 to 4 % by weight.

5. Composition according to claim 4, wherein the composition comprises 2 to 40 % by weight of perlites, especially comprising micronized and expanded perlites with a particle size d98 of less than 200 µm.

6. Composition according to any one of claims 1 to 5, wherein the composition further comprises 0.1 to 0.5 % by weight of an additive consisting of a blend of liquid hydrocarbons, modified fatty acid derivatives, nonionic emulsifiers, and silicone oil.

7. Composition according to claim 6, wherein the liquid hydrocarbons are selected from the group consisting of saturated hydrocarbons with the general formula CₙH₂ₙ₊₂, where n= 5 to 15 with straight or branched carbon chains and cycloalkanes composed of 5 and 6 member rings with the general formula CₙH₂ₙ, and mixtures thereof.

8. Composition according to any one of claims 6 or 7, wherein the modified fatty acid compounds are selected from the group consisting of fatty acid ester, fatty alcohols, alkoxylates, polyglycol-ethers, fatty acids, and mixtures thereof.

9. Composition according to any one of claims 6 to 8, wherein the nonionic emulsifiers are selected from the group consisting of fatty alcohols, cetyl alcohol, stearyl alcohol, cetostearyl alcohol, oleyl alcohol, and mixtures thereof.

10. Composition according to any one of claims 6 to 9, wherein the silicone oil is selected from the group consisting of liquid polymerized siloxane with alternating silicone-oxygen atoms and organic side chains, wherein the side chains are attached to the tetravalent silicone centers comprising alkyl and phenyl groups and mixtures thereof.

11. Composition according to any one of claims 1 to 10, wherein the composition further comprises modified celluloses, starches, biocides, or fungicides as additives.

12. Composition according to claim 11, wherein the starches are modified starches, especially starch ether modified with alkylene oxides with the general formula CₙH₂ₙ + 1 O, where n = 2 to 5.

13. Pasty filler, in particular physically drying spray filler, which is made from the composition according to any one of claims 1 to 12.

14. Method for producing a pasty filler according to claim 13, wherein the method is based on a two-stage process, according to which in a first step dry components are homogenized, and in a second step, the homogenized dry components are added to aqueous or water-dilutable components.

## Patentansprüche

1. Zusammensetzung für einen pastösen Füllstoff (1), umfassend ein organisches Bindemittel, Füllstoffe, Perlite und Additive, wobei die Perlite einen amphiphilen Überzug aufweisen, wobei der amphiphile Überzug alkoxymodifizierte Alkylsilikonharze, und zwar aminoalkylsubstituierte Polydimethylsiloxane der Formel (C₂H₆OSi)ₙ, wobei n = 30 bis 300 beträgt, umfasst, wobei das organische Bindemittel ein Polymerbindemittel ist.

2. Zusammensetzung gemäß Anspruch 1, wobei die Füllstoffe aus der Gruppe ausgewählt sind, die aus Calciumcarbonaten, Calciummagnesiumcarbonaten, Calciumsulfaten und lamellaren kieseligen Materialien oder irgendeiner Kombination davon besteht.

3. Zusammensetzung gemäß Anspruch 2, wobei die lamellaren kieseligen Materialien Kaolin der Illitgruppe umfassen.

4. Zusammensetzung gemäß einem der Ansprüche 1 bis 3, wobei die Zusammensetzung 0,2 bis 10 Gew.-% Palygorskit, vorzugsweise 1 bis 4 Gew.-%, umfasst.

5. Zusammensetzung gemäß Anspruch 4, wobei die Zusammensetzung 2 bis 40 Gew.-% Perlite umfasst, insbesondere umfassend mikronisierte und expandierte Perlite mit einer Teilchengröße d98 von weniger als 200 µm.

6. Zusammensetzung gemäß einem der Ansprüche 1 bis 5, wobei die Zusammensetzung weiterhin 0,1 bis 0,5 Gew.-% eines Additivs umfasst, das aus einem Gemisch von flüssigen Kohlenwasserstoffen, modifizierten Fettsäurederivaten, nichtionischen Emulgatoren und Silikonöl besteht.

7. Zusammensetzung gemäß Anspruch 6, wobei die flüssigen Kohlenwasserstoffe aus der Gruppe ausgewählt sind, die aus gesättigten Kohlenwasserstoffen mit der allgemeinen Formel CₙH₂ₙ₊₂, wobei n = 5 bis 15 beträgt, mit geradkettigen oder verzweigten Kohlenstoffketten und Cycloalkanen, die aus fünf- und sechsgliedrigen Ringen bestehen, mit der allgemeinen Formel CₙH₂ₙ und Gemischen davon besteht.

8. Zusammensetzung gemäß einem der Ansprüche 6 oder 7, wobei die modifizierten Fettsäureverbindungen aus der Gruppe ausgewählt sind, die aus Fettsäureester, Fettalkoholen, Alkoxylaten, Polyglycolethern, Fettsäuren und Gemischen davon besteht.

9. Zusammensetzung gemäß einem der Ansprüche 6 bis 8, wobei die nichtionischen Emulgatoren aus der Gruppe ausgewählt sind, die aus Fettalkoholen, Cetylalkohol, Stearylalkohol, Cetostearylalkohol, Oleylalkohol und Gemischen davon besteht.

10. Zusammensetzung gemäß einem der Ansprüche 6 bis 9, wobei das Silikonöl aus der Gruppe ausgewählt ist, die aus flüssigem polymerisierten Siloxan mit abwechselnden Silicium- und Sauerstoffatomen und organischen Seitenketten besteht, wobei die Seitenketten an die vierwertigen Siliciumzentren gebunden sind und Alkyl- und Phenylgruppen und Gemische davon umfassen.

11. Zusammensetzung gemäß einem der Ansprüche 1 bis 10, wobei die Zusammensetzung weiterhin modifizierte Cellulosen, Stärken, Biozide oder Fungizide als Additive umfasst.

12. Zusammensetzung gemäß Anspruch 11, wobei die Stärken modifizierte Stärken sind, insbesondere Stärkeether, die mit Alkylenoxiden mit der allgemeinen Formel CₙH₂ₙ + 1 O modifiziert sind, wobei n = 2 bis 5 beträgt.

13. Pastöser Füllstoff, insbesondere physikalisch trocknender Sprühfüllstoff, der aus der Zusammensetzung gemäß einem der Ansprüche 1 bis 12 hergestellt ist.

14. Verfahren zur Herstellung eines pastösen Füllstoffs gemäß Anspruch 13, wobei das Verfahren auf einem zweistufigen Verfahren beruht, gemäß dem in einem ersten Schritt trockene Komponenten homogenisiert werden und in einem zweiten Schritt die homogenisierten trockenen Komponenten zu wässrigen oder mit Wasser verdünnbaren Komponenten hinzugefügt werden.

## Revendications

1. Composition pour un matériau de charge pâteux (1), comprenant un agent de liaison organique, des charges, des perlites, et des additifs, dans laquelle les perlites ont un enrobage amphiphile, dans laquelle l'enrobage amphiphile comprend des résines alkylsilicone modifiées par alcoxy, à savoir des polydiméthylsiloxanes substitués par aminoalkyle de formule (C₂H₆OSi)ₙ, dans laquelle n vaut 30 à 300, dans laquelle l'agent de liaison organique est un liant de polymère.

2. Composition selon la revendication 1, dans laquelle les charges sont choisies dans le groupe constitué par des carbonates de calcium, des carbonates de calcium et de magnésium, des sulfates de calcium, et des matériaux siliceux lamellaires, ou toute combinaison de ceux-ci.

3. Composition selon la revendication 2, dans laquelle les matériaux siliceux lamellaires comprennent du kaolin du groupe illite.

4. Composition selon l'une quelconque des revendications 1 à 3, dans laquelle la composition comprend 0,2 à 10 % en poids de palygorskite, de préférence 1 à 4 % en poids.

5. Composition selon la revendication 4, dans laquelle la composition comprend 2 à 40 % en poids de perlites, comprenant spécifiquement des perlites micronisées et expansées avec une taille de particule d98 inférieure à 200 µm.

6. Composition selon l'une quelconque des revendications 1 à 5, dans laquelle la composition comprend en outre 0,1 à 0,5 % en poids d'un additif constitué par un mélange d'hydrocarbures liquides, de dérivés d'acides gras modifiés, d'émulsifiants non ioniques, et d'huile de silicone.

7. Composition selon la revendication 6, dans laquelle les hydrocarbures liquides sont choisis dans le groupe constitué par des hydrocarbures saturés avec la formule générale CₙH₂ₙ₊₂, où n = 5 à 15 avec des chaînes carbone droites ou ramifiées et des cycloalcanes composés de cycles de 5 et 6 éléments avec la formule générale CₙH₂ₙ, et leurs mélanges.

8. Composition selon l'une quelconque des revendications 6 ou 7, dans laquelle les composés acide gras modifiés sont choisis dans le groupe constitué par un ester d'acide gras, des alcools gras, des alcoxylates, des polyglycol éthers, des acides gras, et leurs mélanges.

9. Composition selon l'une quelconque des revendications 6 à 8, dans laquelle les émulsifiants non ioniques sont choisis dans le groupe constitué par les alcools gras, l'alcool cétylique, l'alcool stéarylique, l'alcool cétostéarylique, l'alcool oléylique, et leurs mélanges.

10. Composition selon l'une quelconque des revendications 6 à 9, dans laquelle l'huile de silicone est choisie dans le groupe constitué par du siloxane polymérisé liquide avec des atomes de silicone-oxygène alternés et des chaînes latérales organiques, dans laquelle les chaînes latérales sont attachées aux centres silicone tétravalents comprenant des groupes alkyle et phényle et leurs mélanges.

11. Composition selon l'une quelconque des revendications 1 à 10, dans laquelle la composition comprend en outre des celluloses modifiées, des amidons, des biocides, ou des fongicides en tant qu'additifs.

12. Composition selon la revendication 11, dans laquelle les amidons sont des amidons modifiés, spécifiquement un éther d'amidon modifié par avec des oxydes d'alkylène avec la formule générale CₙH₂ₙ + 1O, où n = 2 à 5.

13. Charge pâteuse, en particulier charge de pulvérisation à séchage physique, qui est constituée à partir de la composition selon l'une quelconque des revendications 1 à 12.

14. Procédé de production d'une charge pâteuse selon la revendication 13, dans lequel le procédé repose sur un processus en deux étapes, selon lequel dans une première étape des composants secs sont homogénéisés, et dans une seconde étape, les composants secs homogénéisés sont ajoutés à des composants aqueux ou diluables dans l'eau.
